# FASCICULE DE BREVET EUROPEEN

(11) **EP 2 950 990 B1**
(45) Date de publication et mention de la délivrance du brevet: **01.08.2018**
(21) Numéro de dépôt: 14706884.5
(22) Date de dépôt: 04.02.2014
(51) Int. Cl.: B29C 33/44, B29C 37/00, B29C 45/33

(54) **MOULE COMPRENANT DES COQUILLES ET AU MOINS UN TIROIR**
FORMWERKZEUG MIT ZWEI HÄLFTEN UND MINDESTENS EINEM SCHIEBER
MOULD WITH MOULD HALVES AND AT LEAST A SLIDE CORE

(30) Priorité: 04.02.2013 FR 1350927
(43) Date de publication de la demande: 09.12.2015
(73) Titulaire: Safran Aircraft Engines, 75015 Paris (FR); SAFRAN, 75015 Paris (FR)
(72) Inventeur: VARIN, Franck, Bernard, Léon, F-77550 Moissy-Cramayel Cedex (FR); CHAUVIN, Thierry, F-60950 Ermenonville (FR)
(74) Mandataire: Calvo de Nó, Rodrigo
(86) Numéro de dépôt international: PCT/FR2014/050205
(87) Numéro de publication internationale: WO 2014/118485

(56) Documents cités:
- EP-A1- 1 216 808
- EP-A2- 0 197 709
- JP-A- H04 327 921
- JP-A- H07 223 042
- JP-A- S62 152 826
- JP-A- 2004 098 654
- US-A- 5 772 822

## Description

La présente invention concerne le domaine du moulage de pièces.

L'invention concerne plus particulièrement un moule comportant une première coquille et une seconde coquille qui sont aptes, en position fermée, à conférer une forme à une pièce destinée à être moulée dans ce moule, un axe principal A étant perpendiculaire au plan principal dans lequel s'étend la première coquille et la seconde coquille. Un moule de ce type est par exemple connu de la demande de brevet EP 1 216 808, qui divulgue un moule selon le préambule de la revendication 1.

Un moule utilisé pour mouler une pièce comporte une première coquille et une seconde coquille. Chaque coquille possède une forme plus ou moins complexe selon la forme désirée de la pièce après son moulage, cependant chaque coquille s'étend essentiellement dans un plan principal. On définit l'axe principal comme étant l'axe qui est perpendiculaire au plan principal de la première coquille, et au plan principal de la seconde coquille lorsque le moule est en position fermée.

Le moule est en position fermée lorsque la première coquille et la seconde coquille sont en contact l'une de l'autre sur la totalité (ou quasi-totalité) de leur périphérie de façon à emprisonner un volume qui est destiné à être rempli par la matière de la pièce pendant le processus de moulage de cette pièce.

La pièce moulée est par exemple un polymère (voir par exemple US 5,772,822, qui divulgue le surmoulage d'un joint sur un panneau de verre), ou un matériau composite constitué d'un polymère renforcé par des fibres (par exemple des fibres de carbone).

Le procédé de moulage comprend une phase de chauffage de la pièce à une température supérieure à la température ambiante pendant que la première coquille et la seconde coquille sont maintenues l'une contre l'autre (position fermée). Dans le cas où la pièce moulée est un polymère, cette phase de chauffage comprend une phase de polymérisation du polymère, à une température comprise entre 80°C et 500°C. Le moule est en position fermée non seulement pendant cette phase de chauffage mais également durant le refroidissement ultérieur de la pièce moulée jusqu'à sa température de démoulage, afin que la pièce prenne la forme désirée (forme définie par le volume entre les deux coquilles). Dans le cas où la pièce moulée est un polymère ou un composite, cette température de démoulage est inférieure à la température de transition vitreuse du polymère. Cette température de démoulage est par exemple la température ambiante.

De tels moules présentent des inconvénients. En effet, le matériau de la pièce moulée présente, dans la majorité des cas, un coefficient de dilatation thermique qui est différent du coefficient de dilation thermique du matériau de la première coquille et de la seconde coquille. Dans les cas où le coefficient de dilatation de la pièce est inférieur à celui des coquilles dans au moins une direction, cette différence génère des contraintes indésirables dans la pièce durant son refroidissement, contraintes qui sont susceptibles d'endommager irréversiblement la pièce, et/ou entraine des difficultés pour extraire la pièce du moule car la pièce demeure coincée dans le moule par serrage.

La présente invention vise à remédier à ces inconvénients.

L'invention vise à proposer un moule qui permette un démoulage aisé de la pièce après son moulage, et qui ne génère pas de contraintes indésirables dans la pièce durant son moulage.

Ce but est atteint grâce à un moule selon la revendication 1. En particulier, le moule comporte au moins un tiroir qui est situé entre la première coquille et la seconde coquille et qui est en contact avec la première coquille et la seconde coquille lorsque le moule est en position fermée, et qui est destiné à être en contact avec la pièce moulée, chacun du ou des tiroirs présentant une première face qui constitue son interface avec la première coquille, cette première face présentant une direction primaire en direction de laquelle ce tiroir est apte à coulisser le long de cette première face lorsque le moule est en position ouverte.

Grâce à ces dispositions, le moule ne génère pas de contraintes indésirables dans la pièce pendant le refroidissement de celle-ci et limite les contraintes résiduelles. En effet, après la suppression de la pression qui maintient en contact la première coquille et la seconde coquille (position fermée), les deux coquilles sont suffisamment écartées l'une de l'autre pour libérer l'espace nécessaire pour permettre à chaque tiroir de coulisser le long de la première face de la première coquille dans la direction primaire de ce tiroir, et ainsi éviter aux tiroirs d'exercer des contraintes sur la pièce. De plus, le démoulage de la pièce s'effectue sans difficultés.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue éclatée et en perspective d'un moule selon l'invention en position ouverte,
- la figure 2 est une vue en perspective d'un moule selon l'invention en position fermée,
- la figure 3 est une coupe partielle du moule de la figure 2 dans le plan III-III,
- la figure 4 est une coupe partielle du moule de la figure 2 dans le plan III-III, le moule étant en position ouverte,
- la figure 5 est une vue en perspective partielle du moule selon l'invention, dans un cas où les bords de la pièce 90 destinée à être moulée ne sont pas plans,
- la figure 6 est une vue en perspective partielle d'une variante du moule selon l'invention, dans le cas où les bords de la pièce 90 destinée à être moulée ne sont pas plans.

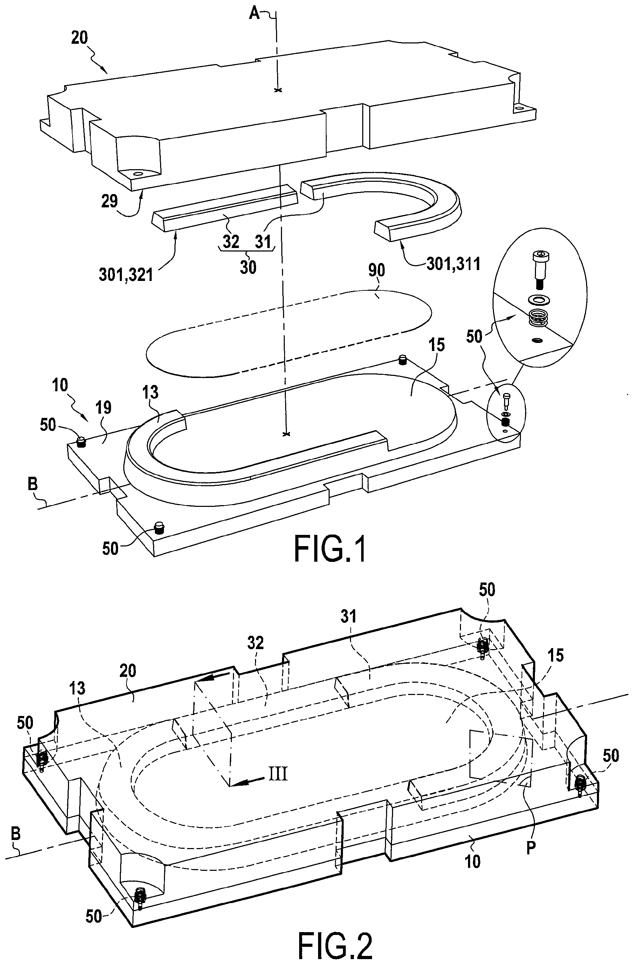

La figure 1 représente un moule 1 selon l'invention, qui comprend une première coquille 10 et une seconde coquille 20, et un ou plusieurs tiroirs 30, dont le positionnement et la fonction sont décrits ci-après.

La première coquille 10 s'étend dans un premier plan principal, et la seconde coquille 20 s'étend dans un second plan principal. Le moule 1 est en position fermée lorsque la première coquille 10, la seconde coquille 20, et le ou les tiroirs 30 sont en contact les uns avec les autres de façon à emprisonner un volume V fermé qui est destiné à contenir la matière de la pièce 90 pendant le processus de moulage de cette pièce 90. Lorsque le moule 1 est en position fermée, le premier plan principal et le second plan principal sont parallèles à un même plan principal (le plan principal du moule 1), et sont perpendiculaires à un axe A qui est l'axe principal du moule 1. L'axe principal A passe par le centre géométrique de la portion interne 15.

Lorsque le moule 1 passe d'une position ouverte à une position fermée, la première coquille 10 et la seconde coquille 20 se rapprochent l'une de l'autre dans la direction de l'axe principal A jusqu'à se toucher. Lorsque le moule 1 passe d'une position fermée à une position ouverte, la première coquille 10 et la seconde coquille 20 s'écartent l'une de l'autre d'une distance non-nulle dans la direction de l'axe principal A. La position ouverte correspond au cas où la force (ou pression) qui maintient en contact la première coquille 10 et la seconde coquille 20 est supprimée, ce qui permet à ces deux coquilles de s'écarter l'une de l'autre.

Dans la description qui suit les termes "interne" et "externe" indiquent une partie située radialement à, ou orientée radialement vers, l'intérieur ou l'extérieur respectivement par rapport à l'axe principal A du moule.

Le ou les tiroirs 30 forment une partie de la périphérie du volume V, et sont donc chacun en contact avec la matière de la pièce 90 destinée à être moulée pendant le processus de moulage de cette pièce.

La figure 1 est une vue éclatée d'un moule 1 selon l'invention dans un cas où le moule 1 comporte deux tiroirs : ainsi, le moule 1 comporte un premier tiroir 31 et un second tiroir 32.

La première coquille 10 présente une bordure 13 qui entoure partiellement la portion interne 15 de la surface de la première coquille 10 destinée à être rempli par la matière de la pièce 90 pendant son moulage. La bordure 13 forme donc une partie (et non la totalité) du périmètre de cette portion interne 15 dans le premier plan principal. La bordure 13 est en élévation par rapport à la portion interne 15 de façon à contenir radialement (latéralement) la matière de la pièce 90 destinée à être moulée sur la portion interne 15.

Lorsque le moule 1 est en position fermée, le premier tiroir 31 et le second tiroir 32 viennent en contact l'un de l'autre et de la bordure 13 de façon à former la totalité du périmètre de la portion interne 15.

Le périmètre de la portion interne 15 présente deux côtés longitudinaux en vis-à-vis l'un de l'autre, et deux côtés transverses en vis-à-vis l'un de l'autre, une première extrémité de l'un des côtés longitudinaux étant reliée à la première extrémité de l'autre des côtés longitudinaux (en vis-à-vis de la première extrémité de l'un des côtés longitudinaux) par un des côtés transverses, et la seconde extrémité de l'un des côtés longitudinaux étant reliée à la seconde extrémité de l'autre des côtés longitudinaux (en vis-à-vis de la seconde extrémité de l'un des côtés longitudinaux) par l'autre des côtés transverses.

Dans le mode de réalisation de la figure 1, le périmètre de la portion interne 15 a une forme oblongue, les deux côtés longitudinaux étant rectilignes et parallèles, et chaque côté transverse étant incurvé et ayant une forme en U. Le premier côté longitudinal prolonge donc une des branches de chacun des côtés transverses, et le second côté longitudinal prolonge l'autre des branches de chacun des côtés transverses.

La direction longitudinale est représentée par l'axe longitudinal B sur les figures 1 et 2.

La bordure 13 est constituée par un des côtés transverses et un des côtés longitudinaux, et a donc la forme d'un J.

Le premier tiroir 31 est constitué par l'autre des côtés transverses. Le second tiroir 32 est constitué par l'autre des côtés longitudinaux.

Lorsque le moule 1 est en position fermée, une des extrémités du premier tiroir 31 est en contact avec l'extrémité de la bordure 13, l'autre extrémité du premier tiroir 31 est en contact avec une extrémité du second tiroir 32, et l'autre extrémité du tiroir 32 est en contact avec l'autre extrémité de la bordure 13.

La figure 2 montre le moule 1 en position fermée.

La seconde coquille 20 épouse la bordure 13, le premier tiroir 31, et le second tiroir 32 tout le long du périmètre de la portion interne 15, de telle sorte que, entre ces deux coquilles, seul un volume (le volume V) au-dessus de la portion interne 15 est libre, ce volume étant destiné à contenir le matériau destiné à être moulé pour former la pièce 90 (le cas échéant, un ou plusieurs canaux reliant ce volume V à l'extérieur du moule afin de permettre l'injection de la matière destinée à former la pièce 90).

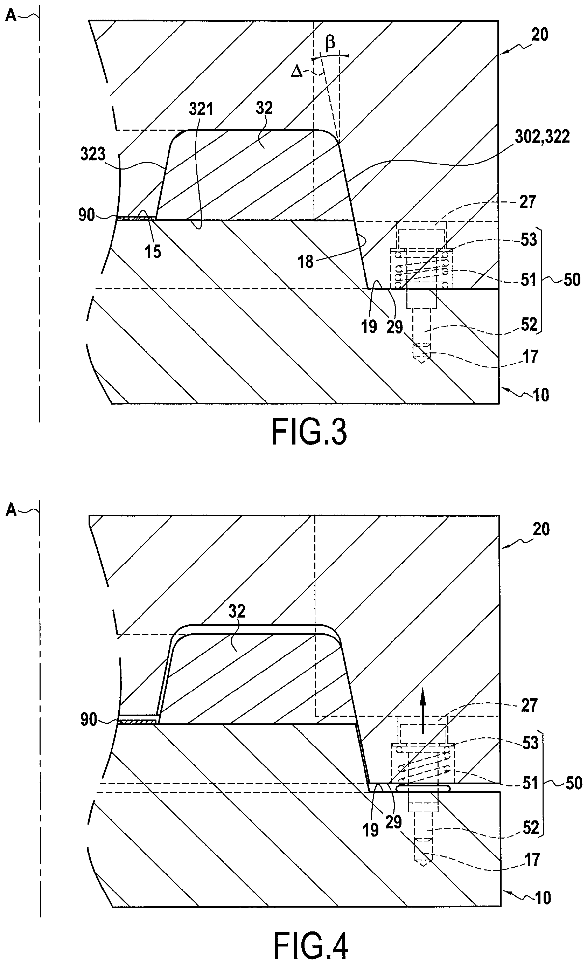

Avantageusement, la première coquille 10 présente, à l'extérieur de la bordure 13, du premier tiroir 31, et du second tiroir 32, une première portion externe 19 qui s'étend dans le premier plan principal, cette première portion externe 19 étant en contact sur la majorité de sa surface avec une seconde portion externe 29 de la seconde coquille 20 lorsque le moule 1 est en position fermée (voir figure 3).

Ainsi, l'étanchéité du moule 1 est améliorée, et est plus aisée à obtenir. Le procédé de moulage d'une pièce 90 est donc plus robuste.

Le moule 1, représenté en figure 1 en vue éclatée, et en figure 2 en position fermée, présente de telles portions externes.

La figure 3 est une coupe du second tiroir 32 dans le plan III-III, qui est un plan perpendiculaire à la direction longitudinale du second tiroir 32. Le plan III-III passe donc de l'intérieur du moule 1 (volume destiné à contenir le matériau à mouler) à l'extérieur du moule 1.

Le plan III-III (plan transversal) montre donc la section transversale du second tiroir 32. Le plan III-III est vertical si l'axe principal A est vertical.

Le second tiroir 32 présente une première face 321 (également notée 301 sur la figure 1) qui est en contact avec la portion interne 15 de la surface de la première coquille 10. La première face 321 constitue l'interface entre le second tiroir 32 et la portion interne 15.

Durant le moulage, le moule 1 est en position fermée, et la matière destiné à former la pièce 90 est prise en sandwich entre la portion interne 15 de la surface de la première coquille 10 et une portion de la surface de la seconde coquille 20 (et occupe ainsi le volume V). La face interne 323 du second tiroir 32 est ainsi en contact avec la seconde coquille 20, et avec la pièce 90. La première coquille 10 et la seconde coquille 20 sont maintenues l'une contre l'autre et le matériau destiné à former la pièce 90 est chauffé, de façon à conformer et polymériser le matériau en la forme désirée, c'est à dire la forme finale de la pièce 90.

Le second tiroir 32 présente une deuxième face, la face externe 322 (également notée 302 sur la figure 3) qui est en contact avec la seconde coquille 20. La face externe 322 est inclinée par rapport à l'axe principal A et par rapport à la portion interne 15 et se rapproche de l'axe principal A en s'éloignant de la portion interne 15 (c'est-à-dire en s'éloignant de la première face 321). Ainsi dans tout plan transversal de section du second tiroir 32 tel que le plan III-III, le second tiroir 32 présente un sommet (face la plus éloignée de la première face plane 321) qui est plus étroit que la première face plane 321.

Ainsi, dans tout plan transversal, la face externe 322 passe par une droite perpendiculaire audit axe principal A et par une droite Δ faisant un angle β strictement compris entre 0° et 90° avec cet axe principal A, de telle sorte que le second tiroir 32 et la seconde coquille 20 sont aptes à coulisser l'un par rapport à l'autre le long de la face externe 322 dans la direction de la droite Δ lorsque le moule 1 est en position ouverte. La droite Δ se rapproche de l'axe principal A dans le sens allant de la première coquille 10 à la seconde coquille 20.

Comme illustré sur la figure 3, lorsque le moule 1 est en position fermée, la seconde coquille 20 bloque le mouvement du second tiroir 32 vers l'intérieur du moule 1, notamment sa translation radiale. Comme expliqué précédemment, ceci vient du fait que la seconde coquille 20 est en contact, en position fermée du moule, avec la face interne 323 du second tiroir 32. De même, lorsque le moule 1 est en position fermée, la seconde coquille 20 bloque le mouvement du second tiroir 32 vers l'extérieur du moule 1, notamment sa translation radiale. Comme expliqué précédemment, ceci vient du fait que la seconde coquille 20 est en contact, en position fermée du moule, avec la face externe 322 du second tiroir 32. Ainsi, lorsque le moule est en position fermée, la seconde coquille 20 bloque toute translation radiale du second tiroir 32. Par conséquent, en position fermée, la forme de la pièce à mouler est définie de manière sûre et ne peut pas changer inopportunément, ce qui garantit la qualité du moulage.

Dans le cas représenté sur les figures 1 à 4, le second tiroir 32 étant rectiligne, l'orientation de la droite Δ dans un plan transversal du second tiroir 32 est identique au fur et à mesure que l'on se déplace le long du périmètre de la portion interne 15 d'un plan transversal à l'autre.

Dans le cas représenté sur les figures 1 à 4, le premier tiroir 31 étant incurvé et ayant la forme d'un tronc de cône, l'orientation de la droite Δ dans un plan transversal du premier tiroir 31 varie au fur et à mesure que l'on se déplace le long du périmètre de la portion interne 15 d'un plan transversal à l'autre.

Dans le cas général, la surface de la face externe (deuxième face) de chacun des tiroirs 30 est telle que dans n'importe lequel des plans transversaux de ce tiroir 30, il existe une direction principale qui est la direction le long de laquelle la face externe 302 de ce tiroir 30 est apte à coulisser le long de la seconde coquille 20 lorsque le moule 1 est en position ouverte. Cette direction principale est celle de la droite Δ. Ainsi, dans tous les cas (donc y compris dans le cas représenté sur les figures 1 à 4), l'angle β de la droite Δ avec l'axe principal A est constant quelle que soit le plan transversal de ce tiroir 30 dans lequel s'étend cette droite Δ. Après le moulage, durant le refroidissement de la pièce 90, la pression qui maintient la première coquille 10 et la seconde coquille 20 l'une contre l'autre est relâchée de telle sorte que la seconde coquille 20 s'écarte de la première coquille 10 dans la direction de l'axe principal A. Le moule 1 est alors en position ouverte.

Ce faisant, un espace est libéré entre la face externe 322 et la seconde coquille 20. Ainsi, durant le refroidissement, le second tiroir 32 est apte à se translater radialement vers l'extérieur le long de la première face 321 (en s'éloignant de l'axe principal A) en direction de la seconde coquille 20, selon une direction perpendiculaire à l'axe longitudinal B, qui est ainsi la direction primaire de la première face 321. Le second tiroir 32 se translate au plus jusqu'à ce que la face externe 322 soit à nouveau en contact avec la seconde coquille 20. En conséquence, le second tiroir 32 ne comprime pas le matériau de la pièce 90 durant le refroidissement, et les contraintes résiduelles présentent dans la pièce 90 sont minimisées.

Le démoulage de la pièce 90 est en outre facilité.

Cette situation est représentée sur la figure 4.

Le ou les tiroirs 30 selon l'invention, parce qu'ils permettent la dilation du matériau de la pièce 90, peuvent être qualifiés de « tiroirs de dilatation ».

Sur les figures 1 à 4, la première portion externe 19 de la première coquille 10 est en contrebas par rapport à la surface de la portion interne 15 et à la première face 321, et est relié au périmètre de la portion interne 15 par un rebord 18. Le rebord 18 est rectiligne dans un plan transversal tel que le plan III-III. Ainsi, la face externe 322 se situe dans le prolongement du rebord 18 lorsque le moule 1 est en position fermée.

Une telle configuration facilite le passage du moule 1 entre position fermée et position ouverte.

Alternativement, le rebord 18 peut se situer extérieurement par rapport à l'extrémité externe du second tiroir 32, c'est-à-dire que le périmètre de la portion interne 15 se prolonge extérieurement au-delà de l'extrémité externe du second tiroir 32.

Le rebord 18 peut éventuellement être parallèle à l'axe principal A.

La description effectuée ci-dessus dans le cas du second tiroir 32 est également valable dans le cas du premier tiroir 31.

Ainsi, dans un plan transversal P représenté sur la figure 2, et qui est un plan de section du premier tiroir 31, la section du premier tiroir 31 est identique à la section du second tiroir 32 représentée sur la figure 3, la première face 321, la face externe 322, et la face interne 323 du second tiroir 32 étant respectivement remplacées par la première face 311, la face externe 312, et la face interne 313 du premier tiroir 31. La première face 311 est également référencée 301 sur la figure 1.

Lorsque la seconde coquille 20 s'écarte de la première coquille 10, le premier tiroir 31 est apte à se translater radialement vers l'extérieur le long de la première face 311. Le premier tiroir 31 se translate dans une direction longitudinale, c'est-à-dire selon l'axe longitudinal B, qui est ainsi la direction primaire de la première face 311.

Plus généralement, les faces externes 312, 322 et les faces internes 313, 323 ne sont pas forcément planes. Ces faces peuvent êtres concaves ou convexes, ou présenter une forme autre en fonction de la forme de la pièce 90 destinée à être moulée, à condition que ces faces épousent les faces de la seconde coquille 20 lorsque le moule 1 est en position fermée, et que le passage du moule 1 entre la position ouverte et la position fermée soit possible.

D'une manière générale, le premier tiroir 31 présente une forme différente d'une forme en U, en fonction de la géométrie de la pièce 90 destinée à être moulée. Par exemple, le premier tiroir 31 est rectiligne et s'étend dans une direction transverse, c'est-à-dire une direction perpendiculaire à l'axe longitudinal B. Quelle que soit sa forme, l'une des extrémités du premier tiroir 31 prend appui sur une extrémité du second tiroir 32, et l'autre extrémité du premier tiroir 31 prend appui sur une extrémité de la bordure 13 lorsque le moule 1 est en position fermée, de telle sorte que le premier tiroir 31, le second tiroir 32, et la bordure 13 forment la totalité du périmètre de la portion interne 15.

Avantageusement, le moule 1 comporte en outre au moins un dispositif de rappel 50 qui est apte à exercer un effort entre la première coquille 10 et la seconde coquille 20 de manière à écarter la première coquille 10 et la seconde coquille l'une de l'autre depuis la position fermée vers la position ouverte.

Ce dispositif de rappel 50 est spécialement utile dans le cas où la première coquille 10 ne s'écarte pas suffisamment par rapport à la seconde coquille 20 après la suppression de la pression qui maintient en contact ces deux coquilles. Ainsi, la première coquille 10 et la seconde coquille 20 sont suffisamment écartées l'une de l'autre de telle sorte que le premier tiroir 31 et le second tiroir 32 disposent d'un espace suffisant pour se translater radialement vers l'extérieur sans engendrer de contraintes dans la pièce 90.

Les figures 1 à 4 présentent un mode de réalisation du dispositif de rappel 50.

Le dispositif de rappel 50 comprend au moins deux ensembles constitués d'un ressort hélicoïdal 51, d'un pion 52 qui est inséré coaxialement (selon l'axe principal du ressort 51) dans le ressort 51, et d'une rondelle 53. La première coquille 10 présente, sur la première portion externe 19, un premier alésage circulaire 17 dans lequel vient se loger la tige du pion 52, la seconde coquille 20 présente, sur la seconde portion externe 29, un second alésage circulaire 27 dans lequel se loge la tête du pion 52, la rondelle 53, et le ressort 51.

Lorsque le moule 1 est en position fermée (de par une pression qui maintient la première coquille 10 et la seconde coquille 20 l'une contre l'autre), le ressort 51 est comprimé, une extrémité du ressort 51 prenant appui sur la rondelle 53 qui elle-même prend appui sur un épaulement du second alésage 27, l'autre extrémité du ressort 51 prenant appui sur la première portion externe 19. Lorsque la pression exercée sur le moule 1 est relâchée, le ressort 51 se détend et contribue ainsi à écarter la seconde coquille 20 de la première coquille 10.

En place d'un ressort hélicoïdal, un autre type de ressort, par exemple un ressort rondelle (type « Belleville »), appelé rondelle élastique, peut être utilisé.

Avantageusement, comme représenté sur les figures 1 et 2, le dispositif de rappel 50 comprend quatre ensembles tels que décrits ci-dessus, chaque ensemble étant disposé sur la première portion externe 19 à un des quatre coins du moule 1.

Cette disposition permet une répartition uniforme des efforts d'écartement entre la première coquille 10 et la seconde coquille 20, et donc une translation de la seconde coquille 20 selon l'axe principal A.

L'invention a été décrite ci-dessus dans un exemple du cas où le moule 1 comporte deux tiroirs 30, l'un des tiroirs étant apte à se translater dans le plan principal du moule dans une direction longitudinale selon l'axe longitudinal B lorsque le moule 1 est en position ouverte, l'autre tiroir 30 étant apte à se translater dans le plan principal dans une direction perpendiculaire à l'axe longitudinal B.

Ces tiroirs peuvent être d'une géométrie quelconque tant qu'ils permettent le passage du moule 1 entre la position ouverte et la position fermée.

Ainsi, durant le refroidissement, le matériau de la pièce 90 n'est comprimé dans aucune direction.

D'une manière générale, le moule 1 selon l'invention peut présenter plus de deux tiroirs 30.

Avantageusement, comme décrit ci-dessus, chaque tiroir 30 présente une deuxième face 302 en contact avec la seconde coquille 20, la deuxième face 302 étant une face externe et étant telle que dans n'importe lequel des plans transversaux de ce tiroir 30 il existe une direction principale qui est une droite Δ faisant un angle β strictement compris entre 0° et 90° avec l'axe principal A, de telle sorte que la deuxième face 302 de ce tiroir 30 et la seconde coquille 20 sont aptes à coulisser l'un par rapport à l'autre le long de la deuxième face 302 dans la direction principale lorsque le moule 1 est en position ouverte, l'angle β de la droite Δ avec l'axe principal A étant constant quelle que soit le plan transversal de ce tiroir 30 dans lequel s'étend la droite Δ.

Selon un autre mode de réalisation, la coquille 10 ne présente pas de bordure 13. Le moule 1 comprend un ou plusieurs tiroirs qui remplacent la bordure 13. Lorsque le moule 1 est en position fermée, l'ensemble des tiroirs forment la totalité du périmètre de la portion interne 15.

Selon l'invention, dans tous les cas le ou les tiroirs 30 sont chacun apte à se translater radialement vers l'extérieur (en s'éloignant de l'axe principal A) afin de ne pas exercer de contraintes sur la pièce 90 durant le refroidissement du moule 1.

Dans la description ci-dessus, la première face 301 (également numérotée 311 et 321, et qui épouse le périmètre de la portion interne 15) de chacun des tiroirs 30 est plane, et la portion interne 15 de la première coquille 10 est plane.

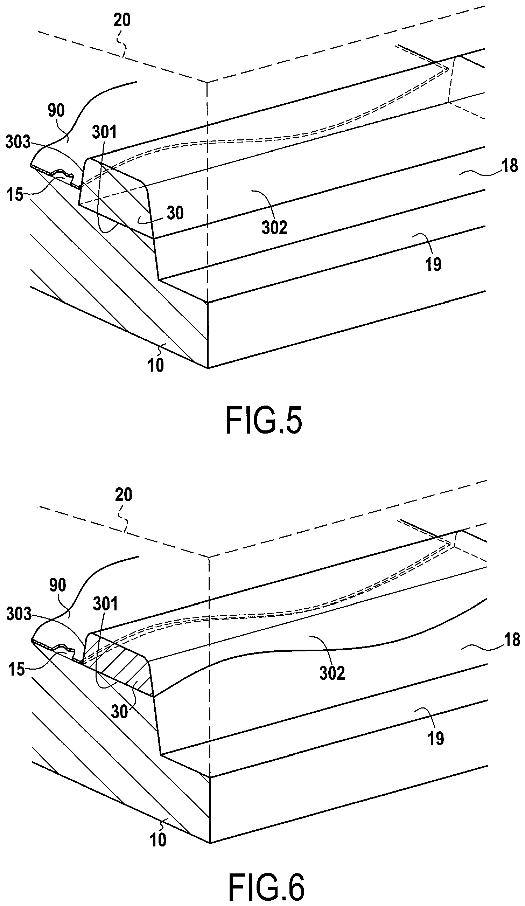

La première face 301 d'un des tiroirs 30 (ou de plusieurs de ces tiroirs 30) peut également être plane dans le cas où la portion interne 15 n'est pas plane (c'est-à-dire que les bords de la pièce 90 destinée à être moulée ne sont pas plans), à condition que chaque partie du bord de la pièce 90 destinée à être moulée, lorsqu'elle repose sur la portion interne 15, rencontre la face interne 303 d'un des tiroirs 30. Cette situation est représentée sur la figure 5.

Ainsi, lorsque le moule 1 passe de la position fermée à la position ouverte, chaque tiroir 30, en se translatant radialement vers l'extérieur, libère de l'espace pour que la pièce 90 soit apte à s'étendre radialement vers l'extérieur sans être comprimée.

En variante, dans le cas où les bords de la pièce 90 destinée à être moulée ne sont pas plans, la première face 301 d'un des tiroirs 30 (ou de plusieurs de ces tiroirs 30) prolonge radialement vers l'extérieur le profil de la portion interne 15 qui lui est adjacent. Ainsi, la partie du bord de la pièce 90 destinée à être moulée, lorsqu'elle repose sur la portion interne 15, rencontre l'extrémité inférieure de la face interne 303 d'un des tiroirs 30. Cette situation est représentée sur la figure 6.

Ainsi, lorsque le moule 1 passe de la position fermée à la position ouverte, chaque tiroir 30, en se translatant radialement vers l'extérieur, libère de l'espace pour que la pièce 90 soit apte à s'étendre radialement vers l'extérieur sur la partie radialement interne du périmètre de la portion 15 qui était épousée par la première face 301, sans être comprimée.

D'une manière générale, en fonction de la géométrie de la pièce destinée à être moulée, la première coquille 10 et/ou la seconde coquille 20 peut être composée de plusieurs sous-coquilles disjointes et séparables les unes des autres.

## Revendications

1. Moule (1) comportant une première coquille (10) et une seconde coquille (20) qui sont aptes, en position fermée, à conférer une forme à une pièce (90) destinée à être moulée dans ledit moule (1), un axe principal A étant perpendiculaire au plan principal dans lequel s'étend ladite première coquille (10) et ladite seconde coquille (20), ledit moule (1) comportant en outre au moins deux tiroirs (30) qui sont situés entre ladite première coquille (10) et ladite seconde coquille (20) et qui sont en contact avec ladite première coquille (10) et ladite seconde coquille (20) lorsque ledit moule (1) est en position fermée, et qui sont destinés à être en contact avec ladite pièce moulée (90), chacun desdits au moins deux tiroirs (30) présentant une première face (301) qui constitue son interface avec ladite première coquille (10), ladite première face (301) présentant une direction primaire en direction de laquelle ce tiroir (30) est apte à coulisser le long de ladite première face (301) lorsque ledit moule (1) est en position ouverte, l'un des tiroirs étant apte à se translater dans le plan principal dans une direction longitudinale selon un axe longitudinal B lorsque le moule (1) est en position ouverte, un autre des tiroirs étant apte à se translater dans le plan principal dans une direction perpendiculaire audit axe longitudinal B, ledit moule étant **caractérisé en ce qu'**une interface de contact entre un tiroir (30) et la seconde coquille (20) est située dans le prolongement d'une interface de contact entre la première coquille (10) et la seconde coquille (20), ledit prolongement s'effectuant dans une direction ayant une composante non-nulle selon l'axe principal A.

2. Moule (1) selon la revendication 1 **caractérisé en ce que** chacun dudit au moins un tiroir (30) présente une deuxième face (302) en contact avec ladite seconde coquille (20), ladite deuxième face (302) étant une face externe et étant telle que dans n'importe lequel des plans transversaux de ce tiroir (30), il existe une direction principale qui est une droite Δ faisant un angle β strictement compris entre 0° et 90° avec ledit axe principal A, de telle sorte que la deuxième face (302) de ce tiroir (30) et ladite seconde coquille (20) sont aptes à coulisser l'un par rapport à l'autre le long de ladite deuxième face (302) dans ladite direction principale lorsque ledit moule (1) est en position ouverte, l'angle β de ladite droite Δ avec ledit axe principal A étant constant quelle que soit le plan transversal de ce tiroir (30) dans lequel s'étend ladite droite Δ.

3. Moule (1) selon la revendication 1 ou 2, **caractérisé en ce qu'**il comporte en outre au moins un dispositif de rappel (50) qui est apte à exercer un effort entre ladite première coquille (10) et ladite seconde coquille (20) de manière à écarter la première coquille (10) et la seconde coquille (20) l'une de l'autre depuis la position fermée du moule (1) vers la position ouverte du moule (1).

4. Moule (1) selon l'une quelconque des revendications 1 à 3, **caractérisé en ce que** lorsque le moule (1) est en position fermée, la seconde coquille (20) bloque la translation radiale de chaque tiroir (30).

## Patentansprüche

1. Formwerkzeug (1) mit einer ersten Hälfte (10) und einer zweiten Hälfte (20), die geeignet sind, in einer geschlossenen Position einem in dem Formwerkzeug (1) zu formenden Bauteil (90) eine Form zu verleihen, wobei eine Hauptachse A senkrecht zu der Hauptebene liegt, in der sich die erste Hälfte (10) und die zweite Hälfte (20) erstrecken, wobei das Formwerkzeug (1) ferner mindestens zwei Schieber (30) aufweist, die sich zwischen der ersten Hälfte (10) und der zweiten Hälfte (20) befinden und die in Kontakt mit der ersten Hälfte (10) und der zweiten Hälfte (20) stehen, wenn sich das Formwerkzeug (1) in der geschlossenen Position befindet, und die dazu bestimmt sind, in Kontakt mit dem Formteil (90) zu sein, wobei jeder der mindestens zwei Schieber (30) eine erste Fläche (301) aufweist, die dessen Schnittstelle mit der ersten Hälfte (10) bildet, wobei die erste Fläche (301) eine Primärrichtung aufweist, in die der Schieber (30) entlang dieser ersten Fläche (301) gleitfähig ist, wenn sich das Formwerkzeug (1) in der offenen Position befindet, wobei einer der Schieber geeignet ist, in der Hauptebene in einer Längsrichtung entlang einer Längsachse B verschoben zu werden, wenn sich das Formwerkzeug (1) in der offenen Position befindet, und ein anderer der Schieber geeignet ist, in der Hauptebene in einer Richtung senkrecht zu der Längsachse B verschoben zu werden, wobei das Formwerkzeug **dadurch gekennzeichnet ist, dass** eine Kontaktschnittstelle zwischen einem Schieber (30) und der zweiten Hälfte (20) in der Verlängerung einer Kontaktschnittstelle zwischen der ersten Hälfte (10) und der zweiten Hälfte (20) angeordnet ist, wobei die Verlängerung in einer Richtung mit einer Komponente ungleich Null entlang der Hauptachse A ausgeführt ist.

2. Formwerkzeug (1) gemäß Anspruch 1, **dadurch gekennzeichnet, dass** jeder der mindestens einen Schieber (30) eine zweite Fläche (302) in Kontakt mit der zweiten Hälfte (20) aufweist, wobei die zweite Fläche (302) eine Außenfläche ist und so gestaltet ist, dass in irgendeiner der Querebenen dieses Schiebers (30) eine Hauptrichtung existiert, die eine Gerade Δ ist, die mit der Hauptachse A einen Winkel β streng zwischen 0° und 90° bildet, sodass die zweite Fläche (302) dieses Schiebers (30) und die zweite Hälfte (20) geeignet sind, relativ zueinander entlang der zweiten Fläche (302) in der Hauptrichtung zu gleiten, wobei, wenn sich das Formwerkzeug (1) in der geöffneten Position befindet, der Winkel β der Geraden Δ mit der Hauptachse A konstant ist, unabhängig von der Querebene des Schiebers (30), in der sich die Gerade Δ erstreckt.

3. Formwerkzeug (1) gemäß Anspruch 1 oder 2, **dadurch gekennzeichnet, dass** es ferner mindestens eine Rückstellvorrichtung (50) aufweist, die geeignet ist, eine Kraft zwischen der ersten Hälfte (10) und der zweiten Hälfte (20) auszuüben, sodass die erste Hälfte (10) und die zweite Hälfte (20) von der geschlossenen Position des Formwerkzeugs (1) bis in die offene Position des Formwerkzeugs (1) voneinander weg bewegt werden.

4. Formwerkzeug (1) gemäß einem der Ansprüche 1 bis 3, **dadurch gekennzeichnet, dass**, wenn sich das Formwerkzeug (1) in der geschlossenen Position befindet, die zweite Hälfte (20) die radiale Verschiebung jedes Schiebers (30) blockiert.

## Claims

1. A mold (1) comprising a first shell (10) and a second shell (20) that are suitable, in the closed position, for imparting a shape to a part (90) that is to be molded in said mold (1), a main axis A being perpendicular to the main plane in which said first shell (10) and said second shell (20) extend, said mold (1) further comprising at least two slides (30) that are situated between said first shell (10) and said second shell (20) and that are in contact with said first shell (10) and said second shell (20) when said mold (1) is in the closed position, and that are to come into contact with said molded part (90), each of said at least two slides (30) presenting a first face (301) that constitutes its interface with said first shell (10), said first face (301) presenting a primary direction along which the slide (30) is suitable for sliding along said first face (301) when said mold (1) is in the open position, one of the slides being suitable for moving in translation in the main plane in a longitudinal direction along a longitudinal axis B when the mold (1) is in the open position, another one of the slides being suitable for moving in translation in the main plane in a direction perpendicular to said longitudinal axis B, said mold being **characterized in that** a contact interface between a slide (30) and the second shell (20) is situated in line with a contact interface between the first shell (10) and the second shell (20), said line being in a direction having a non-zero component along the main axis A.

2. A mold (1) according to claim 1, **characterized in that** each of said at least one slide (30) presents a second face (302) in contact with said second shell (20), said second face (302) being an outer face and being such that in any transverse plane of the slide (30), there exists a main direction defined by a line Δ at an angle β that lies strictly between 0° and 90° relative to said main axis A, in such a manner that the second face (302) of the slide (30) and said second shell (20) are suitable for sliding relative to each other along said second face (302) in said main direction when said mold (1) is in the open position, the angle β between said line Δ and said main axis A being constant regardless of the transverse plane of the slide (30) in which said line Δ extends.

3. A mold (1) according to claim 1 or 2, **characterized in that** it further comprises at least one return device (50) that is suitable for exerting a force between said first shell (10) and said second shell (20) in such a manner as to move the first shell (10) and the second shell (20) apart from each other away from the closed position of the mold (1) towards the open position of the mold (1).

4. A mold (1) according to any one of claims 1 to 3, **characterized in that** when the mold (1) is in the closed position, the second shell (20) prevents movement in radial translation of each slide (30).
